# EUROPÄISCHE PATENTANMELDUNG

(11) **EP 4 375 125 A1**
(43) Veröffentlichungstag der Anmeldung: **29.05.2024**
(21) Anmeldenummer: 23211610.3
(22) Anmeldetag: 22.11.2023
(51) Int. Cl.: B60L 53/302

(54) **KÜHLTANKANORDNUNG FÜR EINE FLÜSSIGKEITSKÜHLUNG EINER LADESTATION FÜR ELEKTRISCH ANTREIBBARE KRAFTFAHRZEUGE, SOCKELANORDNUNG FÜR EINE LADESTATION INSBESONDERE MIT EINER SOLCHEN KÜHLTANKANORDNUNG UND LADESTATION MIT EINER SOLCHEN SOCKELANORDNUNG**

(30) Priorität: 24.11.2022 DE 202022131171 U
(71) Anmelder: ads-tec Energy GmbH, 72622 Nürtingen (DE)
(72) Erfinder: MOLCHANOV, Roman, 72654 Neckartenzlingen (DE); GREIF, Andreas, 73235 Weilheim (DE)
(74) Vertreter: Kordel, Mattias

(57) **Zusammenfassung**

Die Erfindung betrifft eine Kühltankanordnung (29) für eine Flüssigkeitskühlung einer Ladestation (1) für elektrisch antreibbare Kraftfahrzeuge, mit einem Kühltank (13) und einer den Kühltank (13) zumindest abschnittsweise umgreifenden thermischen Isolierung (37), wobei die Isolierung (37) eine ebene Bodenfläche (39) und eine dazu zumindest im wesentlichen parallele Deckfläche (41) sowie eine die Bodenfläche (39) mit der Deckfläche (41) verbindende Wandung (43) aufweist, wobei die Deckfläche (41), die Bodenfläche (39) und die Wandung (41) einen Aufnahmeraum (45) begrenzen, in dem der Kühltank (13) angeordnet ist.

## Beschreibung

Die Erfindung betrifft eine Kühltankanordnung für eine Flüssigkeitskühlung einer Ladestation für elektrisch antreibbare Kraftfahrzeuge, eine Sockelanordnung für eine Ladestation insbesondere mit einer solchen Kühltankanordnung und eine Ladestation mit einer solchen Sockelanordnung.

Aus der deutschen Offenlegungsschrift DE 10 2017 217 879 A1 ist eine Ladestation zum Aufladen eines elektrisch antreibbaren Kraftfahrzeugs bekannt, deren Leistungselektronik mit Hilfe einer unterirdischen Flüssigkeitskühlung gekühlt werden kann. Auch bei oberirdisch aufstellbaren Ladestationen, für deren Aufstellung keine Erdaushubarbeiten nötig sind, besteht das Bedürfnis, eine effektive und effiziente Kühlung bereitzustellen, wobei bekannte Konzepte insbesondere den Nachteil haben, dass die mit der Logistik, insbesondere dem Transport und der Anordnung eines Kühltanks in einem Gehäuse der Ladestation verbundenen Kosten hoch sind. Weiterhin ist in der Regel eine Wartung aufwendig und kompliziert, insbesondere wenn der Kühltank verschachtelt in dem Gehäuse der Ladestation angeordnet ist.

Der Erfindung liegt die Aufgabe zugrunde, eine Kühltankanordnung für eine Flüssigkeitskühlung einer Ladestation für elektrisch antreibbare Kraftfahrzeuge, eine Sockelanordnung für eine Ladestation insbesondere mit einer solchen Kühltankanordnung und eine Ladestation mit einer solchen Sockelanordnung zu schaffen, wobei die genannten Nachteile zumindest reduziert sind, vorzugsweise nicht auftreten.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten Ausführungsformen.

Die Aufgabe wird insbesondere gelöst, indem eine Kühltankanordnung für eine Flüssigkeitskühlung einer Ladestation für elektrisch antreibbare Kraftfahrzeuge geschaffen wird, wobei die Kühltankanordnung einen Kühltank aufweist.

In einer Ausführungsform weist die Kühltankanordnung insbesondere außerdem eine den Kühltank zumindest abschnittsweise, vorzugsweise vollständig umgreifende thermische Isolierung auf. Die Isolierung weist insbesondere eine ebene Bodenfläche und eine dazu zumindest im wesentlichen parallele, insbesondere parallele Deckfläche sowie eine die Bodenfläche mit der Deckfläche verbindende Wandung auf. Die Deckfläche, die Bodenfläche und die Wandung begrenzen einen Aufnahmeraum, in dem der Kühltank angeordnet ist. Vorteilhaft kann die Isolierung zugleich als Verpackung für den Kühltank insbesondere beim Transport des Kühltanks verwendet werden. Dadurch wird in umweltfreundlicher Weise Transportmaterial und Verpackungsmaterial eingespart, und sowohl der Transport als auch die Aufstellung des Kühltanks am Bestimmungsort gestalten sich besonders einfach, da weder Verpackungsmaterial entfernt noch zusätzliches Isolierungsmaterial aufgebracht werden muss.

Insbesondere ist die Isolierung als Verpackung, insbesondere als Transportverpackung des Kühltanks ausgebildet.

Insbesondere hat der Aufnahmeraum die Form des Kühltanks, so dass der Kühltank eng anliegend in dem Aufnahmeraum angeordnet sein kann.

Die Wandung erstreckt sich insbesondere senkrecht zu der Bodenfläche und senkrecht zu der Deckfläche. Insbesondere ist die Wandung eine Umfangswandung der Isolierung.

Unter der Bodenfläche wird im Kontext der vorliegenden technischen Lehre insbesondere eine Fläche der Isolierung verstanden, die bestimmungsgemäß an einer geodätisch unteren Seite der Isolierung und damit zugleich der Kühltankanordnung angeordnet ist. Die Deckfläche ist entsprechend insbesondere eine Fläche, die bestimmungsgemäß an einer geodätisch oberen Seite der Isolierung und damit zugleich der Kühltankanordnung angeordnet ist.

Die Isolierung weist insbesondere eine freitragende, insbesondere stapelbare Form auf. Auf diese Weise ist es vorteilhaft möglich, die Isolierung selbsttragend aufzustellen, insbesondere in einem Lager und/oder auf einer Palette. Vorteilhaft ist es weiterhin möglich, eine Mehrzahl von Isolierungen insbesondere mit jeweils darin angeordnetem Kühltank zu stapeln und damit platzsparend zu lagern und zu transportieren, insbesondere auf einer Palette.

In einer Ausführungsform weist die Isolierung im Wesentlichen die Form eines Quaders auf, oder die Isolierung ist derart ausgestaltet, dass sie innerhalb eines gedachten Quadervolumens angeordnet werden kann, wobei jeweils jede Fläche des gedachten Quaders durch eine Begrenzungsfläche der Isolierung zumindest berührt wird. Insbesondere auf diese Weise ist die Isolierung einfach transportier- und stapelbar ausgebildet.

Insbesondere ist die Isolierung bezüglich ihrer Außenmaße nicht größer als eine handelsübliche Verpackung oder eine herkömmliche Standard-Palette.

Insbesondere weist die Isolierung Polypropylen, insbesondere expandiertes Polypropylen auf oder besteht aus Polypropylen, insbesondere aus expandiertem Polypropylen. Vorteilhaft ist die Isolierung damit recyclebar.

Insbesondere ist der Kühltank - insbesondere bis auf für den Betrieb notwendige Zu- und Abgänge - allseitig geschlossen ausgebildet. Insbesondere ist zusätzlich die Isolierung - insbesondere bis auf notwendige Durchführungen für die für den Betrieb des Kühltanks notwendigen Zu- und Abgänge - allseitig geschlossen ausgebildet.

Gemäß einer Weiterbildung der Erfindung ist vorgesehen, dass die Isolierung zwei Halbschalen aufweist, insbesondere eine obere und eine untere Halbschale, die den Aufnahmeraum umgreifen. Dies stellt eine ebenso einfache wie funktionale Ausgestaltung der Isolierung dar. Insbesondere umgreifen die beiden Halbschalen den Kühltank. Insbesondere weisen die Halbschalen jeweils innen eine komplementäre Form des Kühltanks auf, sodass sie eng anliegend außen an dem Kühltank angeordnet werden können.

Insbesondere greifen die beiden Halbschalen derart ineinander, dass die Isolierung - insbesondere bis auf die notwendigen Durchführungen für die für den Betrieb des Kühltanks notwendigen Zu- und Abgänge - allseitig geschlossen ausgebildet ist.

Die beiden Halbschalen sind insbesondere jeweils als Spritzgussteil ausgebildet, insbesondere durch Spritzgießen hergestellt.

Der Kühltank ist insbesondere eingerichtet zur Aufnahme einer Kühlflüssigkeit, insbesondere eines Glykol-Wasser-Gemischs als Kühlmittel.

Gemäß einer Weiterbildung der Erfindung ist vorgesehen, dass der Kühltank nahtfrei im rotierenden Kunststoff-Spritzguss hergestellt ist. Auf diese Weise kann der Kühltank vorteilhaft besonders dicht ausgebildet sein, sodass eine Leckage von Kühlmittel unmittelbar aus dem Kühltank nahezu ausgeschlossen werden kann.

Gemäß einer Weiterbildung der Erfindung ist vorgesehen, dass an dem Kühltank ein strömungstechnisch einerseits mit einem Inneren des Kühltanks und andererseits mit einer Umgebung des Kühltanks verbundener Entlüftungsschlauch angeordnet ist, der entlang mindestens einer - insbesondere ausgehend von dem Kühltank geodätisch ansteigenden - Windung verläuft. Vorteilhaft wird auf diese Weise wirksam verhindert, dass Kühlmittel aus dem befüllten Kühltank in die Umgebung schwappen kann, wenn der Kühltank bewegt wird. Es ist auf diese Weise vorteilhaft möglich, den Kühltank befüllt zu transportieren. Damit entfällt insbesondere der Schritt des Befüllens am Aufstellort.

Der Entlüftungsschlauch ist insbesondere geodätisch oben an dem Kühltank angeordnet. Insbesondere ist der Entlüftungsschlauch strömungstechnisch mit einer geodätisch oben an dem Kühltank angeordneten Entlüftungsöffnung des Kühltanks verbunden.

In einer Ausführungsform ist der Entlüftungsschlauch beidseitig offen ausgebildet. Es besteht also vorteilhaft zu jedem Zeitpunkt, insbesondere auch beim Transport des Kühltanks, eine strömungstechnische Verbindung zur Umgebung über den Entlüftungsschlauch; auf diese Weise erübrigt sich ein Öffnen des Entlüftungsschlauchs am Aufstellort, sodass eine Entlüftung des Kühltanks im Betrieb einer den Kühltank aufweisenden Ladestation mit besonders hoher Sicherheit gewährleistet ist, da das Öffnen durch einen Werker nicht vergessen werden kann.

Vorteilhaft kann der Entlüftungsschlauch zusätzlich für eine Druckprüfung des Kühltanks auf Dichtigkeit vor dessen Befüllung verwendet werden.

Gemäß einer Weiterbildung der Erfindung ist vorgesehen, dass an dem Kühltank ein strömungstechnisch mit einem Inneren des Kühltanks verbundener Befüllungsstutzen angeordnet ist, der in einem geodätisch unteren Bereich in das Innere des Kühltanks mündet und ausgehend davon in Richtung einer Befüllungsöffnung des Befüllungsstutzens ansteigt. Auf diese Weise kann der Kühltank leicht auch ohne Verwendung einer Pumpe, insbesondere aus einem Kanister oder dergleichen, befüllt werden. Eine Pumpe kann gleichwohl verwendet werden, um den Durchfluss zu steigern und den Kühltank schneller zu befüllen.

Insbesondere ist die Befüllungsöffnung unterhalb einer vorbestimmten Füllstandshöhe des Kühltanks angeordnet. Vorteilhaft kann der Kühltank auf diese Weise auch ohne Pumpe nach dem Prinzip der kommunizierenden Röhren entleert werden.

In einer Ausführungsform weist der Befüllungsstutzen im Bereich der Befüllungsöffnung ein Rückschlagventil und/oder eine Schnellkupplung auf.

Die Aufgabe wird auch gelöst, indem eine Sockelanordnung für eine Ladestation für elektrisch antreibbare Kraftfahrzeuge geschaffen wird, wobei die Sockelanordnung einen Tragrahmen aufweist, an oder in dem ein Kühltank zur Aufnahme von Kühlmittel und eine Fördervorrichtung zur Förderung des Kühlmittels angeordnet sind. Vorzugsweise wird mit der Sockelanordnung ein Modul bereitgestellt, das separat von anderen Teilen einer Ladestation, insbesondere separat von einem Gehäuse der Ladestation, gehandhabt, insbesondere transportiert werden kann. Dies vereinfacht den Transport und das Aufstellen der Sockelanordnung und der Ladestation sowie anschließende Wartungsarbeiten. Somit sind auch die damit verbundenen Kosten gering.

Insbesondere ist die Fördervorrichtung strömungstechnisch mit dem Kühltank verbunden. Insbesondere weist die Sockelanordnung mindestens ein erstes Verbindungselement zur mechanischen Verbindung mit einem Gehäuse einer Ladestation, erste Fluidanschlüsse zur strömungstechnischen Verbindung der Fördervorrichtung und des Kühltanks mit Kühlmittelleitungen der Ladestation und erste elektrische Anschlüsse zur Wirkverbindung mit einer Steuervorrichtung und/oder einer Leistungsversorgung der Ladestation auf. Insbesondere auf diese Weise kann ein schneller, modularer Transport und Aufbau der Ladestation erfolgen.

In einer Ausführungsform ist das erste Verbindungselement als Verschraubungselement ausgebildet, insbesondere ausgewählt aus einer Gruppe, bestehend aus: Einer Schraubbohrung, einem Gewindeelement, insbesondere einer Mutter oder einem in den Tragrahmen eingebrachten Gewinde, einem Stehbolzen, und einem Gewindestift.

In einer Ausführungsform weist die Sockelanordnung eine Mehrzahl erster Verbindungselemente auf.

Die ersten Fluidanschlüsse sind in einer Ausführungsform als Schnellkupplungen oder in anderer geeigneter Weise ausgebildet.

Die ersten elektrischen Anschlüsse sind in einer Ausführungsform als Steckverbinder ausgebildet.

Insbesondere weist die Sockelanordnung eine erfindungsgemäße Kühltankanordnung oder eine Kühltankanordnung nach einer oder mehreren der zuvor beschriebenen Ausführungsformen auf. In Zusammenhang mit der Sockelanordnung ergeben sich insbesondere diejenigen Vorteile, die zuvor bereits in Zusammenhang mit der Kühltankanordnung erläutert wurden.

Gemäß einer Weiterbildung der Erfindung ist vorgesehen, dass die Sockelanordnung oberirdisch aufstellbar eingerichtet ist. Vorteilhaft bedarf somit keiner Erdaushubarbeiten, um die Sockelanordnung und damit zugleich die Ladestation aufzustellen.

Gemäß einer Weiterbildung der Erfindung ist vorgesehen, dass die Fördervorrichtung schwingungsgedämpft in dem Tragrahmen gelagert ist. Alternativ oder zusätzlich ist vorgesehen, dass die Fördervorrichtung körperschallisoliert in dem Tragrahmen gelagert ist. Vorteilhaft wird auf diese Weise insbesondere eine Geräuschentwicklung während des Betriebs einer die Sockelanordnung aufweisenden Ladestation reduziert.

Insbesondere ist eine Pumpengruppenaufnahme über mindestens ein Dämpfungselement, insbesondere eine Mehrzahl an Dämpfungselementen, auf einem Bodenblech des Tragrahmens angeordnet. In einer Ausführungsform ist das mindestens eine Dämpfungselement mit dem Bodenblech verschraubt. In einer Ausführungsform ist die Pumpengruppenaufnahme als Blechbiegeteil ausgebildet oder aus gebogenem Blech gebildet. An der Pumpengruppenaufnahme ist eine die Fördervorrichtung aufweisende Pumpengruppe angeordnet, insbesondere befestigt.

In einer Ausführungsform kann die Pumpengruppe insbesondere von einer Frontseite des Tragrahmens her auf die Pumpengruppenaufnahme aufgesetzt oder in die Pumpengruppenaufnahme eingeschoben und - ebenfalls von der Frontseite her - an der Pumpengruppenaufnahme verschraubt werden, insbesondere mit mindestens einer bis höchstens vier Schrauben, insbesondere mit drei Schrauben.

In einer Ausführungsform weist die Pumpengruppe einen Blechrahmen auf, an dem die Fördervorrichtung befestigt ist. Insbesondere kann der Blechrahmen auf die Pumpengruppenaufnahme aufgesetzt oder in die Pumpengruppenaufnahme eingeschoben und mit der Pumpengruppenaufnahme verschraubt werden. Die Pumpengruppenaufnahme weist insbesondere auf einer der Frontseite abgewandten Rückseite ein Federelement, insbesondere eine Blech-Federzunge, auf, das den Blechrahmen mit einer Haltekraft beaufschlagt, wenn der Blechrahmen an der Pumpengruppenaufnahme angeordnet ist. Insbesondere kann der Blechrahmen von der Frontseite her unter das Federelement geschoben werden.

Gemäß einer Weiterbildung der Erfindung ist vorgesehen, dass der Tragrahmen beidseitig - insbesondere von der Frontseite her zugängliche - Handhabungseingriffe aufweist. Auf diese Weise kann der Tragrahmen und damit zugleich die Sockelanordnung einfach gehandhabt, verlagert und insbesondere an einem Aufstellort aufgestellt werden.

Insbesondere weist der Tragrahmen beidseitig Trägerelemente auf, die ihrerseits die Handhabungseingriffe aufweisen. Insbesondere ist das Bodenblech zwischen den Trägerelementen angeordnet und verbindet die Trägerelemente miteinander.

In einer Ausführungsform weist die Sockelanordnung außerdem mindestens ein an dem Tragrahmen anordenbares Verkleidungselement zur Abdeckung der Handhabungseingriffe und insbesondere zusätzlich zumindest der Frontseite auf. Dadurch kann vorteilhaft ein ästhetisches Erscheinungsbild der Sockelanordnung für einen äußeren Betrachter erreicht werden.

In einer Ausführungsform sind die Handhabungseingriffe als Staplereingriffe für den Eingriff einer Staplergabel eines Gabelstaplers ausgebildet. Dies ermöglicht eine besonders einfache und zugleich effiziente Handhabung.

Gemäß einer Weiterbildung der Erfindung ist vorgesehen, dass der Tragrahmen eine Auffangwanne zum Auffangen zumindest eines Teils des in dem Kühltank angeordneten Kühlmittels aufweist oder bildet.

Insbesondere ist das Bodenblech als Auffangwanne ausgebildet oder bildet die Auffangwanne.

In einer Ausführungsform weist die Sockelanordnung mindestens einen Sensor zur Erfassung von in die Auffangwanne gelangender Flüssigkeit und/oder zur Erfassung einer Kühlmittel-Leckage auf. In einer Ausführungsform ist der mindestens eine Sensor ausgewählt aus einer Gruppe, bestehend aus einem Schwimmerschalter und einem Näherungsschalter.

Insbesondere ist zumindest ein erster Sensor des mindestens einen Sensors im Bereich der Auffangwanne angeordnet und eingerichtet, um in die Auffangwanne gelangende Flüssigkeit, insbesondere Kühlmittel oder von außen - beispielsweise infolge einer Überschwemmung - eindringendes Wasser, zu detektieren. In einer Ausführungsform ist der erste Sensor als Schwimmerschalter ausgebildet.

Alternativ oder zusätzlich weist die Sockelanordnung als mindestens einen zweiten Sensor des mindestens einen Sensors einen Füllstandssensor auf, der angeordnet und eingerichtet ist, um einen Füllstand des Kühlmittels in dem Kühltank zu erfassen. Wenn Kühlmittel aus einem Kühlkreislauf der Ladestation austritt, kann dies somit über eine Abnahme des Füllstands in dem Kühltank detektiert werden. In einer Ausführungsform ist der zweite Sensor als - insbesondere an dem Kühltank angeordneter - Näherungsschalter ausgebildet. Vorteilhaft kann der Näherungsschalter außen an dem Kühltank oder an der Isolierung angeordnet werden, sodass der Kühltank, sowie insbesondere auch die Isolierung, allseitig geschlossen ausgebildet sein kann.

In einer Ausführungsform weist die Sockelanordnung den ersten Sensor und den zweiten Sensor auf. Insbesondere wird anhand einer Kombination von Sensorsignalen des ersten Sensors und des zweiten Sensors wenigstens ein Ereignis, ausgewählt aus einer Kühlmittel-Leckage und von außen in die Auffangwanne eintretendem Wasser, erkannt. Insbesondere kann anhand der Kombination von Sensorsignalen zwischen den genannten Ereignissen unterschieden werden:
Lässt ein erstes Sensorsignal des ersten Sensors auf in die Auffangwanne eintretende Flüssigkeit schließen, wobei zugleich ein zweites Sensorsignal des zweiten Sensors keine Veränderung des Füllstands im Kühltank erkennen lässt, kann darauf geschlossen werden, dass - beispielsweise aufgrund einer Überschwemmung mit einem Wasserstand, der höher ist als ein Rand der Auffangwanne - Wasser von außen in die Auffangwanne eindringt. Lässt demgegenüber das erste Sensorsignal auf in die Auffangwanne eintretende Flüssigkeit schließen, wobei zugleich das zweite Sensorsignal eine Abnahme des Füllstands im Kühltank erkennen lässt, kann auf eine Kühlmittel-Leckage geschlossen werden. Insbesondere kann in beiden Fällen die Ladestation aus Sicherheitsgründen abgeschaltet werden.

Die Aufgabe wird auch gelöst, indem eine Ladestation mit einem Gehäuse und einer erfindungsgemäßen Sockelanordnung oder eine Sockelanordnung nach einer oder mehreren der zuvor beschriebenen Ausführungsformen geschaffen wird. Das Gehäuse ist eingerichtet, um oberhalb der Sockelanordnung, insbesondere auf der Sockelanordnung angeordnet zu werden. In Zusammenhang mit der Ladestation ergeben sich insbesondere diejenigen Vorteile, die bereits zuvor in Zusammenhang mit der Sockelanordnung oder der Kühltankanordnung beschrieben wurden. Indem die Sockelanordnung außerdem unterhalb des Gehäuses angeordnet werden kann, wird vorteilhaft vermieden, dass aus der Kühltankanordnung austretendes Kühlmittel in das Gehäuse laufen und die dort angeordneten elektrischen Komponenten beeinträchtigen kann.

Als Ladestation wird in der Elektrotechnik jedwede, insbesondere stationäre oder mobile, Vorrichtung oder elektrische Anlage bezeichnet, welche dazu dient, mobilen akkubetriebenen Geräten, Maschinen oder Kraftfahrzeugen durch einfaches Einstellen oder Einstecken Energie zuzuführen, ohne den Energiespeicher - etwa die Traktionsbatterie eines Elektroautos - zwangsläufig entnehmen zu müssen. Ladestationen für Elektroautos werden mitunter auch als "Stromtankstellen" bezeichnet und können mehrere Ladepunkte umfassen. Bekannt sind hier insbesondere Gleichstrom-Schnellladesysteme (high performance charging systems oder high power charging systems, HPC-Systeme) wie das in Europa verbreitete, sogenannte kombinierte Ladesystem (combined charging system, CCS). Beim gattungsmäßigen Gleichstromladen wird Gleichstrom aus der Ladestation direkt in die Batterie des Fahrzeugs eingespeist und hierzu durch einen leistungsstarken Gleichrichter, bevorzugt der Ladestation, vom Stromnetz oder durch große Pufferakkumulatoren an z.B. Solartankstellen bereitgestellt. Im Fahrzeug befindet sich ein Batteriemanagementsystem, das mit der Ladestation direkt oder indirekt kommuniziert, um die Stromstärke und -spannung anzupassen oder bei Erreichung einer vorbestimmten Kapazitätsgrenze den Vorgang zu beenden. Eine Leistungselektronik befindet sich hierbei üblicherweise in der Ladestation. Da die Gleichstromanschlüsse der Ladestation direkt - ohne Umweg über einen AC/DC-Wandler des Fahrzeugs - mit entsprechenden Anschlüssen der Traktionsbatterie verbunden werden, lassen sich verlustarm hohe Ladeströme übertragen, was kurze Ladezeiten ermöglicht.

In einer Ausführungsform ist die Ladestation als eine Ladesäule ausgebildet. Insbesondere weist die Ladestation mindestens einen Ladepunkt, insbesondere genau einen Ladepunkt oder genau zwei Ladepunkte, auf.

Insbesondere ist die Ladestation als Schnellladestation ausgebildet. In einer Ausführungsform ist die Ladestation als batteriegestützte Ladestation, insbesondere als batteriegestützte Schnellladestation, ausgebildet.

Insbesondere weist das Gehäuse mindestens ein zweites Verbindungselement zur mechanischen Verbindung mit der Sockelanordnung, insbesondere mit dem mindestens einen ersten Verbindungselement, auf.

Insbesondere weist das Gehäuse eine Frontplatte, eine der Frontplatte gegenüberliegende Rückenplatte und beidseitig Seitenteile auf, wobei mindestens eines der Seitenteile als Tür ausgebildet ist. In einer Ausführungsform sind beide Seitenteile als Türen ausgebildet. Die Seitenteile sind insbesondere nach geodätisch unten etwas länger ausgebildet als die Frontplatte und die Rückenplatte, wobei die Seitenteile die ersten und zweiten Verbindungselemente verdecken, wenn das Gehäuse auf die Sockelanordnung aufgesetzt und mechanisch mit der Sockelanordnung verbunden ist.

In einer Ausführungsform weist das Gehäuse eine Dachplatte auf, an der insbesondere mindestens ein Hebeelement, insbesondere eine Hebeöse, angeordnet ist, mittels der das Gehäuse angehoben, insbesondere von der Sockelanordnung abgehoben oder auf die Sockelanordnung abgesenkt werden kann. In einer Ausführungsform weist die Dachplatte vier Ecken und an jeder Ecke jeweils ein Hebeelement, insbesondere eine Hebeöse auf.

Gemäß einer Weiterbildung der Erfindung ist vorgesehen, dass in dem Gehäuse elektrische Komponenten der Ladestation angeordnet sind, insbesondere die Leistungselektronik und vorzugsweise eine Batterieanordnung zur Zwischenspeicherung elektrischer Energie, eine Steuervorrichtung, außerdem insbesondere zweite elektrische Anschlüsse zur Wirkverbindung der Steuervorrichtung und/oder mindestens einer elektrischen Komponente mit der Fördervorrichtung und insbesondere mit mindestens einem Sensor, insbesondere ausgewählt aus dem ersten Sensor und dem zweiten Sensor, insbesondere mit den ersten elektrischen Anschlüssen, sowie weiterhin insbesondere Kühlleitungen zur Kühlung der elektrischen Komponenten, sowie zweite Fluidanschlüsse zur strömungstechnischen Verbindung der Kühlleitungen mit der Fördervorrichtung und dem Kühltank, insbesondere mit den ersten Fluidanschlüssen.

In einer Ausführungsform ist die Steuervorrichtung eingerichtet, um die Fördervorrichtung anzusteuern. Alternativ oder zusätzlich ist die Steuervorrichtung eingerichtet, um anhand von wenigstens einem Sensorsignal, insbesondere ausgewählt aus einem ersten Sensorsignal des ersten Sensors und einem zweiten Sensorsignal des zweiten Sensors, auf wenigstens ein Ereignis, ausgewählt aus einer Kühlmittel-Leckage und von außen in die Auffangwanne eintretendem Wasser, zu schließen. Die Steuervorrichtung ist insbesondere weiterhin eingerichtet, um einen Betrieb der Fördervorrichtung zu beenden, wenn das wenigstens eine Ereignis erkannt wird. Auf diese Weise kann vorteilhaft ein Austreten von Kühlmittel früh unterbunden werden, was es insbesondere vorteilhaft erlaubt, das Aufnahmevolumen der Auffangwanne kleiner auszulegen als das Volumen des Kühltanks. Weiterhin kann vorteilhaft eine Schädigung oder Gefährdung der Ladestation oder von Nutzern der Ladestation - insbesondere durch elektrischen Kurzschluss oder im Wasser anliegende Hochspannung bei Überschwemmung - verhindert werden. Insbesondere ist die Steuervorrichtung eingerichtet, um anhand der Kombination von Sensorsignalen zwischen den genannten Ereignissen zu unterscheiden, insbesondere wie dies zuvor bereits in Zusammenhang mit der Sockelanordnung erläutert wurde. Alternativ oder zusätzlich ist die Steuervorrichtung eingerichtet, um das wenigstens eine erkannte Ereignis an einen Betreiber oder Service der Ladestation zu melden.

In einer Ausführungsform ist das zweite Verbindungselement als Verschraubungselement ausgebildet, insbesondere ausgewählt aus einer Gruppe, bestehend aus: Einer Schraubbohrung, einem Gewindeelement, insbesondere einer Mutter oder einem in das Gehäuse eingebrachten Gewinde, einem Stehbolzen, und einem Gewindestift.

In einer Ausführungsform weist das Gehäuse eine Mehrzahl zweiter Verbindungselemente auf.

Die zweiten Fluidanschlüsse sind in einer Ausführungsform als Schnellkupplungen oder in anderer geeigneter Weise ausgebildet.

Die zweiten elektrischen Anschlüsse sind in einer Ausführungsform als Steckverbinder, insbesondere komplementär zu den als Steckverbinder ausgebildeten ersten elektrischen Anschlüssen, ausgebildet.

Die Erfindung wird im Folgenden anhand der Zeichnung näher erläutert. Dabei zeigen:
- Figur 1: eine schematische Darstellung eines Ausführungsbeispiels einer Ladestation mit einem Ausführungsbeispiel einer Sockelanordnung;
- Figur 2: eine Darstellung des Ausführungsbeispiels der Sockelanordnung;
- Figur 3: eine Detaildarstellung des Ausführungsbeispiels der Sockelanordnung, und
- Figur 4: eine Detaildarstellung eines Kühltanks der Sockelanordnung.

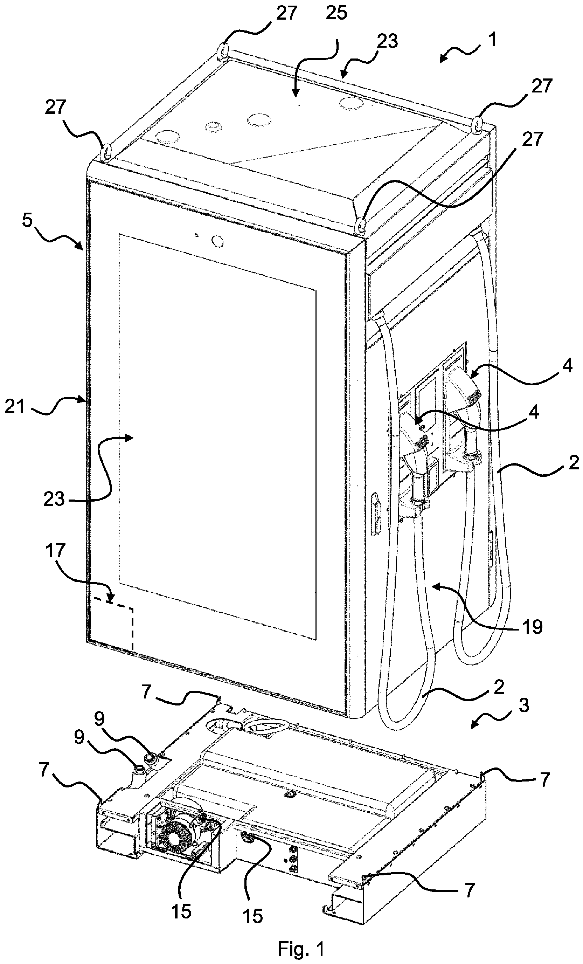

**Fig. 1** zeigt eine schematische Darstellung eines Ausführungsbeispiels einer Ladestation 1 mit einem Ausführungsbeispiel einer Sockelanordnung 3.

Die insbesondere als Ladesäule ausgebildete Ladestation 1 weist ein Gehäuse 5 und die insbesondere oberirdisch, insbesondere ebenerdig aufgestellte Sockelanordnung 3 auf. Das Gehäuse 5 ist eingerichtet, um auf der Sockelanordnung 5 angeordnet zu werden. Bei dem hier dargestellten Ausführungsbeispiel weist die Ladestation 1 zwei Ladepunkte mit jeweils einem Ladekabel 2 mit daran angeordnetem Ladestecker 4 auf.

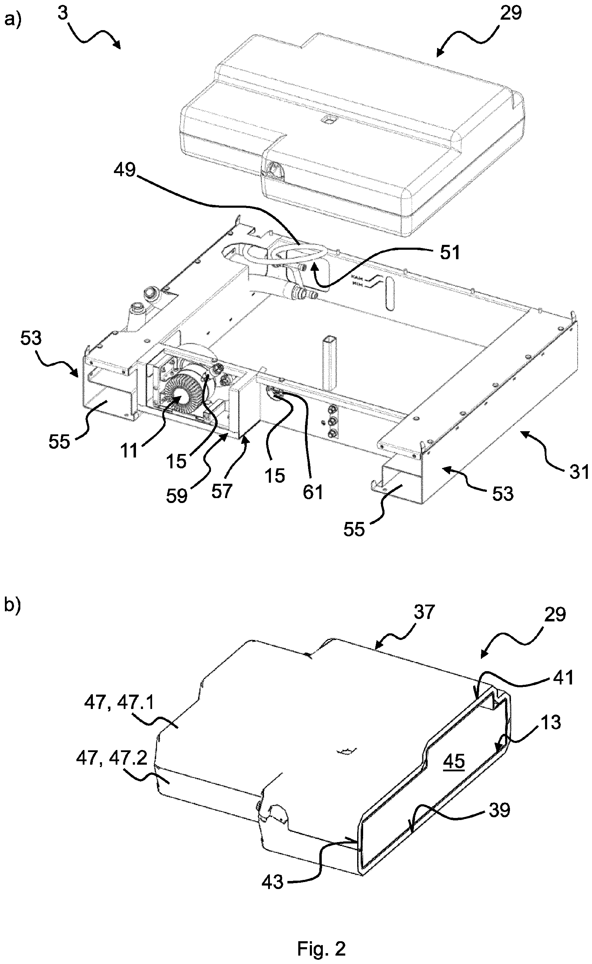

Insbesondere weist die Sockelanordnung 3 eine Mehrzahl erster Verbindungselemente 7 zur mechanischen Verbindung mit dem Gehäuse 5 auf. Weiterhin weist die Sockelanordnung 3 auch erste Fluidanschlüsse 9 zur strömungstechnischen Verbindung einer in Figur 2 dargestellten Fördervorrichtung 11 und eines Kühltanks 13 mit zweiten Fluidanschlüssen der Ladestation 1 sowie erste elektrische Anschlüsse 15 zur Wirkverbindung mit zweiten elektrischen Anschlüssen einer Steuervorrichtung und/oder einer Leistungsversorgung der Ladestation 1 auf.

Insbesondere weist das Gehäuse 5 eine Mehrzahl zweiter Verbindungselemente 17 zur mechanischen Verbindung mit der Sockelanordnung 3, insbesondere mit den ersten Verbindungselementen 7 auf. Von den zweiten Verbindungselementen 17 ist hier nur ein zweites Verbindungselement 17 schematisch dargestellt.

Insbesondere weist das Gehäuse 5 eine Frontplatte 19, eine Rückenplatte 21 und beidseitig Seitenteile 23 auf, wobei die Seitenteile 23 insbesondere als Türen ausgebildet sind. Das Gehäuse 5 weist außerdem eine Dachplatte 25 auf, an der insbesondere vier Hebeösen 27 angeordnet sind.

**Fig. 2** zeigt eine Darstellung des Ausführungsbeispiels der Sockelanordnung 3 mit einem Ausführungsbeispiel einer Kühltankanordnung 29.

Gleiche und funktionsgleiche Elemente sind in allen Figuren mit gleichen Bezugszeichen versehen, sodass insofern jeweils auf die vorangegangene Beschreibung verwiesen wird.

Bei a) ist eine Explosionsdarstellung der Sockelanordnung 3 mit der Kühltankanordnung 29 dargestellt.

Die Sockelanordnung 3 weist einen Tragrahmen 31 und an oder in diesem die Kühltankanordnung 29 zur Aufnahme von Kühlmittel sowie die Fördervorrichtung 11 zur Förderung des Kühlmittels auf.

Bei b) ist die Kühltankanordnung 29 in einer Schnittdarstellung dargestellt. Sie weist den Kühltank 13 und eine diesen zumindest abschnittsweise, vorzugsweise vollständig umgreifende thermische Isolierung 37 auf. Die Isolierung 37 weist insbesondere eine ebene Bodenfläche 39 und eine dazu zumindest im wesentlichen parallele Deckfläche 41 sowie eine die Bodenfläche 39 mit der Deckfläche 41 verbindende Wandung 43 auf. Die Bodenfläche 39, die Deckfläche 41 und die Wandung 43 begrenzen einen Aufnahmeraum 45, in dem der Kühltank 13 angeordnet ist. Die Isolierung 37 fungiert zugleich als Verpackung für den Kühltank 13 beim Transport.

Die Isolierung weist insbesondere zwei Halbschalen 47, nämlich eine erste Halbschale 47.1 und eine zweite Halbschale 47.2 auf, die den Aufnahmeraum 45, insbesondere den Kühltank 13 umgreifen.

Zurückkommend zur Darstellung bei a) ist an dem Kühltank 13 geodätisch oben insbesondere ein strömungstechnisch einerseits mit einem Inneren des Kühltanks 13 und andererseits mit einer Umgebung des Kühltanks 13 verbundener Entlüftungsschlauch 49 angeordnet, der entlang einer ausgehend von dem Kühltank 13 geodätisch ansteigenden Windung 51 verläuft.

Der Tragrahmen 31 weist insbesondere beidseitig Trägerelemente 53 auf, an denen als Staplereingriffe ausgebildete Handhabungseingriffe 55 ausgebildet sind. Zwischen den Trägerelementen 53 ist ein Bodenblech 57 angeordnet, das die Trägerelemente 53 miteinander verbindet.

Der Tragrahmen 31 bildet weist außerdem eine Auffangwanne 59 zum Auffangen zumindest eines Teils des in dem Kühltank 13 angeordneten Kühlmittels auf. Insbesondere ist das Bodenblech 57 als die Auffangwanne 59 ausgebildet oder bildet die Auffangwanne 59.

Die Sockelanordnung 3 weist insbesondere mindestens einen Sensor 61 zur Erfassung von in die Auffangwanne 59 gelangender Flüssigkeit und/oder zur Erfassung einer Kühlmittel-Leckage auf, der als Schwimmerschalter oder als Näherungsschalter ausgebildet sein kann.

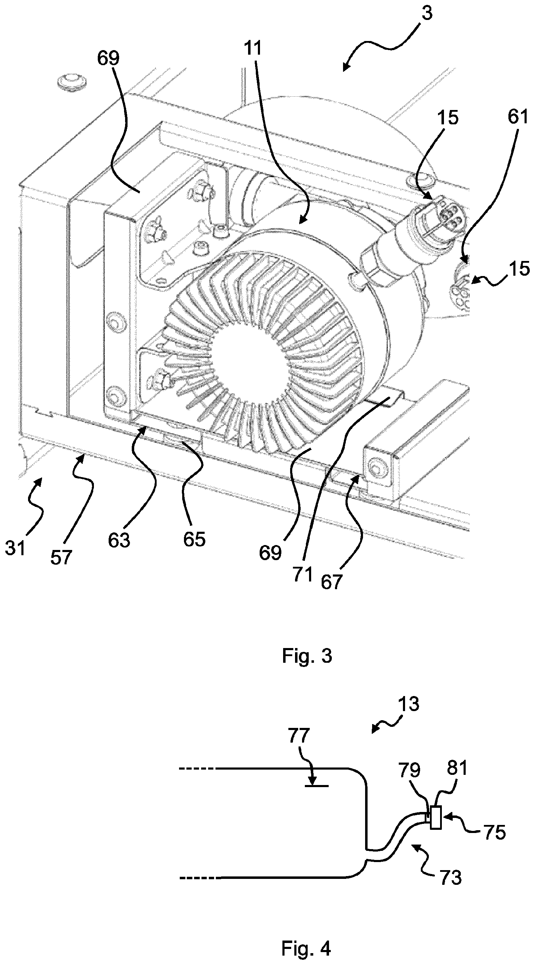

**Fig. 3** zeigt eine Detaildarstellung des Ausführungsbeispiels der Sockelanordnung 3.

Die Fördervorrichtung 11 ist insbesondere schwingungsgedämpft, insbesondere körperschallisoliert in dem Tragrahmen 31 gelagert. Insbesondere ist eine Pumpengruppenaufnahme 63 über Dämpfungselement 65 auf dem Bodenblech 57 angeordnet. Die Pumpengruppenaufnahme 63 ist bevorzugt als Blechbiegeteil ausgebildet oder aus gebogenem Blech gebildet. An der Pumpengruppenaufnahme 63 ist eine die Fördervorrichtung 11 aufweisenden Pumpengruppe 67 befestigt. Die Pumpengruppe 67 kann insbesondere von einer Frontseite des Tragrahmens 31 her in die Pumpengruppenaufnahme 63 eingeschoben und - ebenfalls von der Frontseite her - an der Pumpengruppenaufnahme 63 verschraubt werden.

Insbesondere weist die Pumpengruppe 63 einen Blechrahmen 69 auf, an dem die Fördervorrichtung 11 befestigt ist. Die Pumpengruppenaufnahme 63 weist insbesondere auf einer der Frontseite abgewandten Rückseite ein insbesondere als Blech-Federzunge ausgebildetes Federelement 71 auf, das den Blechrahmen 69 mit einer Haltekraft beaufschlagt, wenn der Blechrahmen 69 an der Pumpengruppenaufnahme 63 angeordnet ist. Insbesondere kann der Blechrahmen 69 von der Frontseite her unter das Federelement 71 geschoben werden.

**Fig. 4** zeigt eine Detaildarstellung des Kühltanks 13. An dem Kühltank 13 ist insbesondere ein strömungstechnisch mit dem Inneren des Kühltanks 13 verbundener Befüllungsstutzen 73 angeordnet, der in einem geodätisch unteren Bereich in das Innere des Kühltanks 13 mündet und ausgehend davon in Richtung einer Befüllungsöffnung 75 des Befüllungsstutzens 73 ansteigt. Insbesondere ist die Befüllungsöffnung 75 unterhalb einer vorbestimmten Füllstandshöhe 77 des Kühltanks 13 angeordnet. Der Befüllungsstutzen 73 weist im Bereich der Befüllungsöffnung 75 insbesondere ein Rückschlagventil 79 und/oder eine Schnellkupplung 81 auf.

## Patentansprüche

1. Kühltankanordnung (29) für eine Flüssigkeitskühlung einer Ladestation (1) für elektrisch antreibbare Kraftfahrzeuge, mit einem Kühltank (13) und einer den Kühltank (13) zumindest abschnittsweise umgreifenden thermischen Isolierung (37), wobei die Isolierung (37) eine ebene Bodenfläche (39) und eine dazu zumindest im wesentlichen parallele Deckfläche (41) sowie eine die Bodenfläche (39) mit der Deckfläche (41) verbindende Wandung (43) aufweist, wobei die Deckfläche (41), die Bodenfläche (39) und die Wandung (41) einen Aufnahmeraum (45) begrenzen, in dem der Kühltank (13) angeordnet ist.

2. Kühltankanordnung (29) nach Anspruch 1, wobei die Isolierung (37) zwei Halbschalen (47) aufweist, die den Aufnahmeraum (45) umgreifen.

3. Kühltankanordnung (29) nach einem der vorhergehenden Ansprüche, wobei der Kühltank (13) nahtfrei im rotierenden Kunststoff-Spritzguss hergestellt ist.

4. Kühltankanordnung (29) nach einem der vorhergehenden Ansprüche, wobei an dem Kühltank (13) ein strömungstechnisch einerseits mit einem Inneren des Kühltanks (13) und andererseits mit einer Umgebung des Kühltanks (13) verbundener Entlüftungsschlauch (49) angeordnet ist, der entlang mindestens einer - insbesondere ausgehend von dem Kühltank (13) geodätisch ansteigenden - Windung (51) verläuft.

5. Kühltankanordnung (29) nach einem der vorhergehenden Ansprüche, wobei an dem Kühltank (13) ein strömungstechnisch mit einem Inneren des Kühltanks (13) verbundener Befüllungsstutzen (73) angeordnet ist, der in einem geodätisch unteren Bereich in das Innere des Kühltanks (13) mündet und ausgehend davon in Richtung einer Befüllungsöffnung (75) des Befüllungsstutzens (73) ansteigt, wobei die Befüllungsöffnung (75) unterhalb einer vorbestimmten Füllstandshöhe (77) des Kühltanks (13) angeordnet ist.

6. Sockelanordnung (3) für eine Ladestation (1) für elektrisch antreibbare Kraftfahrzeuge, mit einem Tragrahmen (31), an oder in dem ein Kühltank (13) zur Aufnahme von Kühlmittel, insbesondere eine Kühltankanordnung (29) nach einem der Ansprüche 1 bis 5, und eine Fördervorrichtung (11) zur Förderung des Kühlmittels angeordnet sind, wobei die Fördervorrichtung (11) strömungstechnisch mit dem Kühltank (13) verbunden ist, und wobei die Sockelanordnung (3) mindestens ein erstes Verbindungselement (7) zur mechanischen Verbindung mit einem Gehäuse (5) einer Ladestation (1), erste Fluidanschlüsse (9) zur strömungstechnischen Verbindung der Fördervorrichtung (11) und des Kühltanks (13) mit Kühlmittelleitungen der Ladestation (1) und erste elektrische Anschlüsse (15) zur Wirkverbindung mit einer Steuervorrichtung und/oder einer Leistungsversorgung der Ladestation (1) aufweist.

7. Sockelanordnung (3) nach Anspruch 6, wobei die Sockelanordnung (3) oberirdisch aufstellbar eingerichtet ist.

8. Sockelanordnung (3) nach einem der Ansprüche 6 oder 7, wobei die Fördervorrichtung (11) schwingungsgedämpft und/oder körperschallisoliert in dem Tragrahmen (31) gelagert ist.

9. Sockelanordnung (3) nach einem der Ansprüche 6 bis 8, wobei der Tragrahmen (31) beidseitig Handhabungseingriffe (55), insbesondere Staplereingriffe für den Eingriff einer Staplergabel eines Gabelstaplers, aufweist, wobei die Sockelanordnung (3) vorzugsweise außerdem mindestens ein an dem Tragrahmen (31) anordenbares Verkleidungselement zur Abdeckung der Handhabungseingriffe (55) aufweist.

10. Sockelanordnung (3) nach einem der Ansprüche 6 bis 9, wobei der Tragrahmen (31) eine Auffangwanne (59) zum Auffangen zumindest eines Teils des in dem Kühltank (13) angeordneten Kühlmittels aufweist oder bildet, wobei die Sockelanordnung (3) insbesondere mindestens einen Sensor (61) zur Erfassung von wenigstens einem Ereignis, ausgewählt aus in die Auffangwanne (59) gelangender Flüssigkeit und einer Kühlmittel-Leckage, aufweist.

11. Ladestation (1) mit einem Gehäuse (5) und einer Sockelanordnung (3) nach einem der Ansprüche 6 bis 10, wobei das Gehäuse (5) eingerichtet ist, um oberhalb der Sockelanordnung (3) angeordnet zu werden und mindestens ein zweites Verbindungselement (17) zur mechanischen Verbindung mit der Sockelanordnung (3), insbesondere mit dem mindestens einen ersten Verbindungselement (7), aufweist.
